# EUROPEAN PATENT APPLICATION

(11) **EP 1 041 105 A2**
(43) Date of publication of application: **04.10.2000**
(21) Application number: 00302116.9
(22) Date of filing: 15.03.2000
(51) Int. Cl.: C08J 7/04, C09D 129/04, C09D 139/06, C09D 171/02

(54) **Anti-fogging sheet and container using same**

(30) Priority: 31.03.1999 JP 9239799; 31.03.1999 JP 9248899
(71) Applicant: CHUO KAGAKU CO. LTD., Kohnosu-shi Saitama-ken (JP)
(72) Inventor: Watanabe, Akihito, Kohnosu-shi, Saitama-ken (JP); Suzuki, Masahiro, Kazo-shi, Saitama-ken (JP); Koyama, Masatoshi, Kumagaya-shi, Saitama-ken (JP); Kameyama, Hirokazu, Kodama-gun, Saitama-ken (JP)
(74) Representative: Rackham, Anthony Charles

(57) **Abstract**

An anti-fogging sheet having a transparent substrate, and an antifogging layer provided on one side of the transparent substrate, wherein the antifogging layer contains a lauric acid ester of sucrose having an HLB value of 14-16 and a water-soluble polymer, and wherein the weight ratio of the lauric acid ester of sucrose to the water-soluble polymer is 50:50 to 80:20.

## Description

This invention relates to an anti-fogging sheet useful for forming transparent containers for containing food. The present invention is also directed to a container produced from the anti-fogging sheet.

Transparent food containers have been hitherto prepared by subjecting a thermoplastic sheet such as a biaxially oriented polystyrene sheet, an amorphous polyethylene terephthalate sheet or a polypropylene sheet to thermoforming. One problem of known transparent containers is that their surfaces are apt to be fogged due to condensation of moisture when chilled. Thus, a number of anti-fogging agents have been proposed.

JP-A-S53-14771 proposes applying a coating of polyvinyl alcohol over a surface of a synthetic resin sheet. The polyvinyl alcohol layer is, however, easily cracked when a container produced therefrom is deformed. Moreover, the anti-fogging property is not sufficient to prevent fogging of the container displayed in a cold show box.

US-A-5,814,684 discloses a coating composition for forming an anti-fogging layer containing a fatty acid ester of sucrose, a hydrophilic film-forming polymer and a polyvalent alcohol such as sorbitol. The proportion of the sucrose aliphatic ester to the hydrophilic polymer is recommended to be from 20:100 to 80:100 because a proportion of the sucrose aliphatic ester below 20:100 is insufficient to obtain satisfactory anti-fogging property, whereas too high a proportion in excess 80:100 causes stickiness of the coated layer and fails to fit for practical use. The polyvalent alcohol is incorporated in the anti-fogging coating composition to prevent hardening, static charging and blocking of the coated layer. The anti-blocking property of the coated layer, however, has been found to be unsatisfactory because of the moisture absorbing property of the polyvalent alcohol. Further, the use of the polyvalent alcohol has been found to adversely affect compatibility between the coating composition and a surface to be coated.

JP-A-S53-115781 discloses a thermoplastic film having a surface coated with a mixture of an anti-fogging agent and a silicone oil. Because of poor compatibility of the silicone oil with the anti-fogging agent, however, it is difficult to obtain a uniform, transparent anti-fogging layer.

The present invention has been made in view of the above problems of the conventional anti-fogging sheet.

In accordance with one aspect of the present invention there is provided an anti-fogging sheet comprising a transparent substrate, and an antifogging layer provided on one side of said transparent substrate and containing a lauric acid ester of sucrose having an HLB value of 14-16 and a water-soluble polymer, the weight ratio of said lauric acid ester of sucrose to said water-soluble polymer being 50:50 to 80:20.

The present invention also provides a container of a food, comprising a portion made of the above anti-fogging sheet, said antifogging layer providing an inside surface of said container.

The anti-fogging sheet according to the present invention has excellent, stable, durable anti-fogging properties and is suitable for producing transparent food containers. The anti-fogging sheet also has high transparency and good anti-blocking properties and can withstand deep forming.

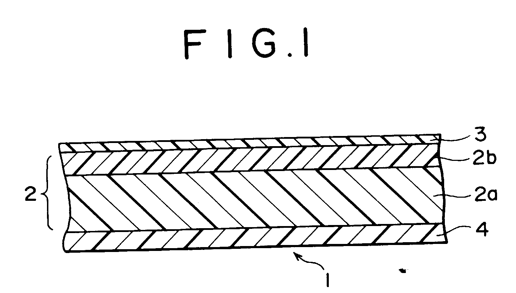

The present invention will be described in detail below with reference to the accompanying drawings, in which Fig. 1 is a sectional view schematically illustrating an embodiment of an anti-fogging sheet according to the present invention.

Referring to Fig. 1, designated generally as 1 is an anti-fogging sheet according to one embodiment of the present invention. The sheet 1 has a transparent substrate 2 and an anti-fogging layer 3 provided on one surface of the substrate 2.

The anti-fogging layer 3 contains a lauric acid ester of sucrose having an HLB value of 14-16 (hereinafter referred to simply as "the ester") and a water-soluble polymer. The weight ratio of the ester to the water-soluble polymer should be 50:50 to 80:20, preferably 60:40 to 70:30.

When the weight ratio is lower than 50:50, namely when the amount of the ester is less than 50 % by weight, the anti-fogging property of the layer 3 is significantly reduced and, further, the anti-fogging layer 3 is apt to be cracked. When the weight ratio is greater than 80:20, namely when the amount of the ester exceeds 80 % by weight, the adhesion strength between the anti-fogging layer 3 and the substrate 2 is reduced so that, when the sheet 1 is wounded into a roll, the anti-fogging layer 3 tends to be separated from the substrate 2 and transferred onto the reverse side thereof. Moreover, too large an amount of the ester is undesirable because the anti-fogging property tends to be reduced with time, because the anti-fogging effect is insufficient at a low temperature and because the anti-fogging property is highly influenced by a silicone layer 4 which is optionally provided on the other side of the substrate 2 as described hereinafter.

When the weight ratio is within the above-specified range, the anti-fogging layer 3 exhibits high, stable anti-fogging property. Moreover, even when the silicone layer 4 is provided for improving anti-blocking property of the sheet 1 and even when there are coating defects in the silicone layer 4 such as unevenness and insufficient dryness, the anti-fogging property of the anti-fogging layer 3 according to the present invention is not adversely affected.

Any known lauric acid ester of sucrose may be used for the purpose of the present invention, as long as the HLB thereof is within the range of 14-16. The HLB of the ester can be controlled by the amount of lauric acid bonded to the sucrose.

Any water-soluble polymer may be used in the anti-fogging layer 3. Illustrative of suitable water-soluble polymers are polyamino acid, polyvinyl pyrrolidone, polyvinyl alcohol and polyethylene glycol. It is preferred that the polyvinyl pyrrolidone have an average polymerization degree of 50-600 for reasons of suitable viscosity of coating liquid for the formation of the anti-fogging layer 3, desirable mechanical strengths of the layer 3 and excellent anti-fogging effect of the layer 3. For the similar reasons, the polyvinyl alcohol preferably has a saponification degree of at least 80 % and an average polymerization degree of 100-1,000, and the polyethylene glycol preferably has a molecular weight of 3,000-20,000 and a polymerization degree of 70-450.

The use of a water soluble cellulose such as carboxymethyl cellulose and hydroxyethyl cellulose is less suitable because such a modified cellulose generally contains insoluble matters which, even in a trace amount, adversely affects the anti-fogging property.

The anti-fogging layer 3 generally has a thickness of 0.01-0.2 µm, preferably 0.02-0.1 µm.

The transparent substrate 2 may be made of a polymer such as a polyethylene resin (e.g. ethylene homopolymer or copolymer), a polypropylene resin (e.g. propylene homopolymer or copolymer), a polystyrene resin (styrene homopolymer or copolymer), amorphous polyethylene terephthalate, polylactic acid and mixtures thereof. Uniaxially or biaxially oriented sheet may be also used as the substrate 2. The substrate 2 generally has a thickness of 150-1,000 µm.

For reasons of improving the wettability or compatibility of a coating liquid for the anti-fogging layer 3, it is preferred that the substrate 2 comprise, as shown in Fig. 1, a first polyolefin resin layer 2a, and a second polyolefin resin layer 2b laminated or coextruded thereon and containing an anti-fogging agent and/or an antistatic agent. The second layer 2b has a thickness smaller than that of the first layer 2a. The thickness of the first layer 2a is generally 150-600 µm, preferably 200-500 µm, whereas the thickness of the second layer 2b is generally 10-300 µm, preferably 20-250 µm, with a thickness ratio of the first layer 2a to the second layer 2b being generally 2:1 to 10:1, preferably 3:1 to 5:1.

The first polyolefin layer 2a may be made of, for example, low density polyethylene, high density polyethylene, homopolypropylene, a propylene-ethylene block copolymer, a propylene-ethylene random copolymer, polybutylene, polymethylpentene or a mixture of two or more of the above polymers. For reasons of high transparency, the use of a polypropylene resin (e.g. homopolypropylene or a propylene random copolymer) is preferred. A sorbitol compound may be incorporated into the polypropylene resin layer as a transparent nucleus agent. A low density polyethylene or an ethylene elastomer including so called LLDPE and Metallocene PE may also be incorporated in the polypropylene resin layer for improving the mechanical strengths thereof such as impact resistance in an amount of up to 20 % by weight. The polypropylene resin desirably has a melt flow rate (MFR) of 0.5-5.0 g/10 minutes, more preferably 1.0-3.0 g/10 minutes for reasons of good moldability during thermoforming into for example a container.

The second polyolefin layer 2b may be a polymer similar to that of the first polyolefin layer 2a. The layer 2b may be non-stretched, uniaxially stretched or bi-axially stretched. Non-stretched polypropylene resin is preferably used.

The second polyolefin layer 2b contains an anti-fogging agent and/or an antistatic agent. Illustrative of suitable anti-fogging and/or antistatic agents are (a) a tertiary amide of a higher fatty acid, (b) a higher fatty acid ester of sorbitan, (c) a higher fatty acid ester of glycerol, (d) a higher fatty acid ester of polyglycerol and (e) mixtures thereof.

The higher fatty acid constituting the above compounds (a)-(d) may be a compound having 8-22 carbon atoms, preferably 12-18 carbon atoms. The polyglycerol generally has an average polymerization degree of at least 1, preferably 1.5-10, more preferably 2-6. The average number of the higher fatty acid groups in the compounds (b)-(d) is generally 1-1.5, preferably 1.

The anti-fogging agent and/or antistatic agent may be incorporated into the second layer 2b in an amount of 0.05-1 % by weight, preferably 0.1-0.5 % by weight. Too small an amount of the agent below 0.05 % by weight is insufficient to impart to the second layer 2b desired wettability or compatibility with a coating liquid for the anti-fogging layer 3. Thus, with such a small amount, a uniform thickness of the anti-fogging layer 3 is not obtainable and, hence, desirable anti-fogging effect cannot be obtained, When the amount of the agent exceeds 1 % by weight, on the other hand, the second layer 2b tends to be whitened and to loose its transparency.

The tertiary amide of a higher fatty acid is preferably a compound of the formula: 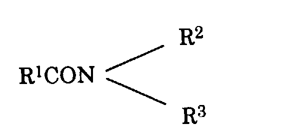 wherein R¹CO is an acyl group derived from the higher fatty acid and R² and R³ each represent an aliphatic group and may form a cyclic aliphatic group together.

The group R¹ is preferably an alkyl or alkenyl group which has 7-21, preferably 11-17 carbon atoms and which may have a substituent such as a hydroxyl group or an alkoxyl group. The groups R² and R³ are each preferably an alkyl or alkenyl group which has 2-22, preferably 2-18 carbon atoms and which may have a substituent such as a hydroxyl group or an alkoxyl group. The group R² is preferably a 2-hydroxyethyl group (CH(OH)CH₂-).

Illustrative of suitable tertiary amides of a higher fatty acid are diethanollaurylamide, diethanolstearylamide, N-dodecyl-N-hydroxythyloctadecanamide, N-(2-hydroxydodocyl)-N-hydroxyethyloctadecanamide, N-hydroxyethyl-N-octadecyloctadecanamide and N-hydroxyethyl-N-(2-hydroxyoctadecyl)octadecanamide.

The higher fatty acid ester of sorbitan is an ester of sorbitan with a higher fatty acid. The sorbitan is an intra-molecular dehydration product of sorbitol and may be, for example, 1,4-sorbitan, 1,5-sorbitan or a sorbide. The sorbitan ester preferably contains 50-100 % by weight, preferably 80-100 % by weight of a mono ester of a higher fatty acid with sorbitan. A diester may be present up to 50 % by weight.

Illustrative of suitable higher fatty acid ester of sorbitan are sorbitan monolaurate, sorbitan monopalmitate, sorbitan monostearate and sorbitan monooleate.

The higher fatty acid ester of glycerol or polyglycerol ("glycerol or polyglycerol" will be hereinafter referred to as (poly)glycerol) is an ester of (poly) glycerol with a higher fatty acid. The (poly)glycerol ester preferably contains 50-100 % by weight, preferably 80-100 % by weight of a mono ester of a higher fatty acid. A diester may be present up to 50 % by weight.

Illustrative of suitable higher fatty acid esters of (poly)glycerol are (poly)glycerol monostearate, (poly)glycerol monoplamitate, (poly)glycerol monolaurate and (poly)glycerol monooleate.

The above-described anti-fogging agent and/or antistatic agent is kneaded with a polyolefin resin and extruded to form the second layer 2b.

The second layer 2b may additionally contain a surfactant other than the anti-fogging agent and/or antistatic agent, such as a salt of an alkanesulfonic acid having 8-18 carbon atoms or a salt of an alkylarylsulfonic acid having 8-18 carbon atoms.

It is desirable that the second layer 2b be subjected to a corona discharge treatment prior to the formation of the anti-fogging layer 3 thereon, for reasons of obtaining an improved wettability of the surface and of expediting the breeding of the anti-fogging agent and/or antistatic agent out of the second layer 2b. The corona discharge treatment is generally performed so that the second layer 2b without being incorporated with the anti-fogging agent and/or an antistatic agent would have a wetting index (in accordance with the Japanese Industrial standard JIS K6768) of 46-54 dyne for reasons of attaining optimum anti-fogging effect and of prevention of whitening of the second layer 2b.

The anti-fogging sheet 1 according to the present invention may be produced as follows.

The substrate 2 in the form of a laminate having the first and second layers 2a and 2b may be prepared by coextrusion, heat press bonding or using an adhesive. When coextrusion is performed using an existing device, there is a possibility that a three-layered laminate having two outer second layers 2b, 2b between which the center first layer 2a is interposed is produced. Such a three-layered laminate may be used for the purpose of the present invention. That surface of the substrate 2 to which the anti-fogging layer 3 is to be formed may be subjected to a corona discharge treatment, if desired.

A coating liquid containing the ester and the water-soluble polymer is prepared by dissolving the ingredients in water. A small amount of an organic solvent such as an alcohol, ketone or ester may be incorporated into the coating liquid to adjust the viscosity of the liquid, to prevent foaming of the liquid, to improve wettability or compatibility of the liquid with the substrate and/or to expedite drying of the liquid.

The coating liquid is then applied to the substrate 2 by any suitable coating method such as a rotor dampening coating method, a kiss-roll air-knife coating method, a reverse roll coating method or a gravure roll coating method. A smoothening roll may be used to smoothen the coated liquid, if desired. The coating liquid generally has a concentration of the dissolved solid matters in the range of 2-30 % by weight. The concentration varies depending upon the coating method adopted. For example, in the case of a kiss-roll air knife coating method or in the case of using a smoothening roll, the concentration is generally 2-10 % by weight. In the case of a reverse roll method or a gravure roll method, the concentration is generally 10-30 % by weight.

The coating is preferably performed such that the coated layer has a solid matter content of 30-100 mg/m²; i.e. the anti-fogging layer 3 has a basis weight of 30-100 mg/m², for reasons of optimum anti-fogging effect and drying efficiency. The coating thus applied is then dried with any suitable means such as an infrared heater, an electric oven or hot air.

As described previously, it is preferred that the rear side of the transparent substrate 2 be provided with a silicone layer 4 for reasons of improving anti-blocking property. Since the anti-fogging layer 3 is tightly bonded to the substrate 2, delamination of the anti-fogging layer 3 from the substrate does not occur upon contact with the silicone layer 4 (when the sheet 1 is stacked one over the other or wound into a roll), even when the silicone layer 4 has coating defects such as unevenness and openings.

The silicone layer 4 may be formed by applying a silicone emulsion onto the rear side of the substrate 2 by any suitable coating method. Illustrative of suitable silicone emulsions are an aqueous dimethylsiloxane emulsion and an aqueous silicone copolymer emulsion (e.g. polyoxyethylenemethylpolysiloxane or polyoxypropylenemethylpolysiloxane). The aqueous emulsion may contain a surfactant such as an anionic, cationic or nonionic surfactant. The silicone layer 4 generally has a thickness of 0.01-0.15 µm, preferably 0.02-0.1 µm.

The anti-fogging sheet according to the present invention is suitably used for the fabrication of containers, such as trays, for foods with the antifogging layer providing an inside surface of the container. Thus, the anti-fogging sheet is subjected to thermoforming to produce container bodies and/or their lids. The thermoforming may be carried out by any suitable known molding method such as vacuum molding, pressure forming or compression molding. Even when the anti-fogging sheet of the present invention is subjected to deep forming, the container obtained shows good anti-fogging effect.

The following examples will further illustrate the present invention.

### Example 1

Polyethylene terephthalate was extruded to form a sheet (substrate) having a thickness of about 380 µm. One of the both sides of the sheet was subjected to a corona discharge treatment so that the treated surface had a wet index of 54 dyne. An aqueous solution containing 3 % by weight of an aqueous solution of lauric acid ester of sucrose (LWA1570 manufactured by Mitsubishi Chemical Company; solid content: 40 % by weight; HLB: 15) and 0.75 % by weight of polyvinyl pyrrolidone (PVPK30 manufactured by ISP Inc.; polymerization degree: about 430) was applied to the treated surface of the sheet in an amount of 2.00 cc/m². The resulting coat was smoothened and dried in an oven to form an anti-fogging layer on the sheet. The anti-fogging layer had a basis weight of 39 mg/m² and a weight ratio of the sucrose lauric ester to the polyvinyl pyrrolidone of 62:38. The other side of the sheet was applied with an aqueous emulsion of dimethyl silicone oil (KM787 manufactured by Shinetsu Silicone Inc.; diluted with water into 10-fold volume) in an amount of 30 mg/m² in terms of solid and then dried to obtain an anti-fogging sheet according to the present invention.

The thus prepared anti-fogging sheet was then thermoformed into a lid having a length of 180 mm, a width of 150 mm and a height of 50 mm using an indirect heat-type vacuum forming machine.

A container was separately prepared and was filled with 100 cc of water having a temperature of 25° C. The container was then covered with the above lid such that the anti-fogging layer was located inside the container, and stored in a show box maintained at 5° C. No fog or condensed water drops were found to form in the initial stage of the storage. Such a state was found to maintain for at least 24 hours.

The above lid was superposed on the same lid to evaluate a blocking tendency. No blocking was observed. The outer surface of the lid covered with the silicone layer was measured for the friction coefficient in accordance with ASTM D1894. The friction coefficient was 0.30.

### Comparative Example 1

Example 1 was repeated in the same manner as described above except that carboxymethyl cellulose (CMC1105 manufactured by Daicel Chemical Inc.) was substituted for the polyvinyl pyrrolidone. Fogs were initially formed on a surface of the lid corresponding to fibrous carboxymethyl cellulose insolubles. After 10 minutes from the commencement of the test, the fogged area spread from the initially fogged portions. The lid showed good anti-blocking property. The friction coefficient was 0.30.

### Example 2

propylene/ethylene random copolymer was extruded to form a sheet (substrate) having a thickness of about 400 µm. One of the both sides of the sheet was subjected to a corona discharge treatment so that the treated surface had a wet index of 50 dyne. An aqueous solution containing 3.6 % by weight of an aqueous solution of lauric acid ester of sucrose (LWA1570 manufactured by Mitsubishi Chemical company; solid content: 40 % by weight; HLB: 15) and 0.50 % by weight of polyvinyl alcohol (PVA203 manufactured by Kurare Inc.; saponification degree: about 88 mole %; polymerization degree: about 300) was applied to the treated surface of the sheet in an amount of 2.56 cc/m². The resulting coat was smoothened and dried in an oven to form an anti-fogging layer on the sheet. The anti-fogging layer had a basis weight of 50 mg/m² and a weight ratio of the sucrose lauric ester to the polyvinyl alcohol of 75:25. Before introduction into the oven, the other side of the sheet was applied with an aqueous emulsion of dimethyl silicone oil (KM787 manufactured by Shinetsu Silicone Inc.; diluted with water into 10-fold volume) in an amount of 30 mg/m² in terms of solid and then dried to obtain an anti-fogging sheet according to the present invention.

The thus prepared anti-fogging sheet was then thermoformed into a lid having a length of 150 mm, a width of 110 mm and a height of 35 mm using an indirect heat-type vacuum forming machine.

A fogging test was performed in the same manner as that in Example 1 to reveal that no fog or condensed water drops were formed in the initial stage of the storage. Such a state was found to maintain for at least 24 hours. No blocking was observed. The friction coefficient was 0.35.

### Comparative Example 2

Example 2 was repeated in the same manner as described above except that the sucrose lauric ester was not used at all and an aqueous solution containing 1.95 % of PVA203 was applied to the sheet in an amount of 2.50 cc/m². The anti-fogging layer had a basis weight of 49 mg/m². Fogs were significantly formed on a surface of the lid corresponding to the portion highly stretched during the thermoforming. Slight fogging also occurred on a surface of the lid corresponding to the portions slightly stretched during the thermoforming. The lid showed good anti-blocking property. The friction coefficient was 0.22.

### Example 3

A 1:1 (wt/wt) blend of polystyrene (melt index: 7.0) and a styrene-butadiene copolymer (melt index 50) was extruded to form a sheet (substrate) having a thickness of about 400 µm. One of the both sides of the sheet was subjected to a corona discharge treatment so that the treated surface had a wet index of 50 dyne. An aqueous solution containing 3.0 % by weight of an aqueous solution of lauric acid ester of sucrose (LWA1570 manufactured by Mitsubishi Chemical Company; solid content: 40 % by weight; HLB: 15) and 0.75 % by weight of polyvinyl alcohol (PVA203 manufactured by Kurare Inc., saponification degree: about 88 mole %; polymerization degree: about 300) was applied to the treated surface of the sheet in an amount of 2.56 cc/m². The resulting coat was smoothened and dried in an oven to form an anti-fogging layer on the sheet. The anti-fogging layer had a basis weight of 50 mg/m² and a weight ratio of the sucrose lauric ester to the polyvinyl alcohol of 62:38. Before introduction into the oven, the other side of the sheet was applied with an aqueous emulsion of dimethyl silicone oil (KM787 manufactured by Shinetsu Silicone Inc.; diluted with water into 10-fold volume) in an amount of 30 mg/m² in terms of solid and then dried to obtain an anti-fogging sheet according to the present invention.

The thus prepared anti-fogging sheet was then thermoformed into a lid having a length of 150 mm, a width of 110 mm and a height of 35 mm using an indirect heat-type vacuum forming machine.

A fogging test was performed in the same manner as that in Example 1 to reveal that no fog or condensed water drops were formed in the initial stage of the storage. Such a state was found to maintain for at least 24 hours. No blocking was observed. The friction coefficient was 0.22.

### Comparative Example 3

Example 3 was repeated in the same manner as described above except that the amounts of the sucrose lauric ester and PVA203 were changed to 4.5 % by weight and 0.1 % by weight, respectively. The anti-fogging layer had a basis weight of 51 mg/m² and a weight ratio of the sucrose lauric ester to the polyvinyl alcohol of 95:5.

A fogging test was performed in the same manner as that in Example 1 to reveal that a fogged pattern was formed. Because of its high moisture absorbing properties, the anti-fogging layer became sticky and was partly transferred to the other side of the sheet during winding of the sheet around a mandrel. Thus, when the sheet was unwound for fabrication of a lid, a pattern of the transferred portions was observed on the sheet. After the sheet had been molded into the lid, the pattern was no longer observed, i.e. the lid had good appearance. However, when the lid was subjected to the fogging test, the pattern was developed thereon because of fogging.

The lid showed fair anti-blocking property but was slightly sticky. The friction coefficient was 0.37.

### Example 4

Polylactic acid (PLA9000 manufactured by Shimadzu Corporation; MI: about 7.0) was extruded to form a sheet (substrate) having a thickness of about 300 µm. One of the both sides of the sheet was subjected to a corona discharge treatment so that the treated surface had a wet index of 50 dyne. An aqueous solution containing 3.0 % by weight of an aqueous solution of lauric acid ester of sucrose (LWA1570 manufactured by Mitsubishi Chemical Company; solid content: 40 % by weight; HLB: 15) and 0.75 % by weight of polyvinyl alcohol (PEG6000S manufactured by Sanyo Kasei Industry Co., Ltd.; polymerization degree: about 190) was applied to the treated surface of the sheet in an amount of 2.60 cc/m² with a roll coater. The resulting coat was dried in an oven to form an anti-fogging layer on the sheet. The anti-fogging layer had a basis weight of 51 mg/m² and a weight ratio of the sucrose lauric ester to the polyvinyl alcohol of 62:38.

The thus prepared anti-fogging sheet was then thermoformed into a lid having a length of 150 mm, a width of 110 mm and a height of 35 mm using an indirect heat-type vacuum forming machine.

A fogging test was performed in the same manner as that in Example 1 to reveal that no fog or condensed water drops were formed in the initial stage of the storage. Such a state was found to maintain for at least 24 hours. No blocking was observed. The friction coefficient was 0.22.

### Example 5

Propylene/ethylene random copolymer (EG7FT manufactured by Nippon Polychem Inc.; melt index MI: 1.3) was co-extruded to form a two-layered sheet (substrate) having a first layer with a thickness of about 80 µm and a second layer with a thickness of about 320 µm. The resin in the extruder for the first layer had been kneaded with diethanol laurylamide (Staform DL manufactured by Nippon Yushi Inc.) so that the first layer had a diethanol laurylamide content of 0.3 % by weight. The first layer of the sheet was subjected to a corona discharge treatment such that the treated surface should have had a wet index of 50 dyne if the amide was not incorporated. An aqueous solution containing 3 % by weight of an aqueous solution of lauric acid ester of sucrose (LWA1570 manufactured by Mitsubishi Chemical Company; solid content: 40 % by weight; HLB: 15) and 0.75 % by weight of polyvinyl alcohol (PVPK301 manufactured by ISP Inc.; polymerization degree: about 430) was applied to the treated first layer of the sheet in an amount of 2.00 cc/m². The resulting coat was smoothened and dried in an oven to form an anti-fogging layer on the sheet. The anti-fogging layer had a basis weight of 39 mg/m² and a weight ratio of the sucrose lauric ester to the polyvinyl alcohol of 62:38. Before introduction into the oven, the other side (second layer) of the sheet was applied with an aqueous emulsion of dimethyl silicone oil (KM787 manufactured by Shinetsu Silicone Inc.; diluted with water into 10-fold volume) in an amount of 30 mg/m² in terms of solid and then dried to obtain an anti-fogging sheet according to the present invention.

The thus prepared anti-fogging sheet was then thermoformed into a lid having a length of 180 mm, a width of 150 mm and a height of 50 mm using an indirect heat-type vacuum forming machine.

A container was separately prepared and was filled with 100 cc of warm water having a temperature of 70° C. The container was then covered with the above lid such that the anti-fogging layer was located inside the container, and stored in a show box maintained at 5° C. No fog or condensed water drops were found to form in the initial stage of the storage. Such a state was found to maintain for at least 24 hours.

The above lid was superposed on the same lid to evaluate a blocking tendency. No blocking was observed. The outer surface of the lid covered with the silicone layer was measured for the friction coefficient in accordance with ASTM D1894. The friction coefficient was 0.30.

### Example 6

propylene/ethylene random copolymer (EG7FT manufactured by Nippon Polychem Inc.; melt index MI: 1.3) was co-extruded to form a two-layered sheet (substrate) having a first layer with a thickness of about 80 µm and a second layer with a thickness of about 320 µm. The resin in the extruder for the first layer had been kneaded with diethanol laurylamide (Staform DL manufactured by Nippon Yushi Inc.) so that the first layer had a diethanol laurylamide content of 0.3 % by weight. The first layer of the sheet was subjected to a corona discharge treatment such that the treated surface should have had a wet index of 48 dyne if the amide was not incorporated. An aqueous solution containing 3.6 % by weight of an aqueous solution of lauric acid ester of sucrose (LWA1570 manufactured by Mitsubishi Chemical Company; solid content: 40 % by weight; HLB: 15) and 0.50 % by weight of polyvinyl alcohol (Poval PVA203 manufactured by Kurare Inc.; saponification degree: about 88 mol %; polymerization degree: about 300) was applied to the treated first layer of the sheet in an amount of 2.56 cc/m². The resulting coat was smoothened and dried in an oven to form an anti-fogging layer on the sheet. The anti-fogging layer had a basis weight of 50 mg/m² and a weight ratio of the sucrose lauric ester to the polyvinyl alcohol of 75:25. Before introduction into the oven, the other side (second layer) of the sheet was applied with an aqueous emulsion of dimethyl silicone oil (KM787 manufactured by Shinetsu Silicone Inc.; diluted with water into 10-fold volume) in an amount of 30 mg/m² in terms of solid and then dried to obtain an anti-fogging sheet according to the present invention.

The thus prepared anti-fogging sheet was then thermoformed into a lid and subjected to a fogging test in the same manner as that in Example 5.

No fog or condensed water drops were found to form in the initial stage of the storage. Such a state was found to maintain for at least 24 hours.

The above lid was superposed on the same lid to evaluate a blocking tendency. No blocking was observed. The outer surface of the lid covered with the silicone layer was measured for the friction coefficient in accordance with ASTM D1894. The friction coefficient was 0.35.

### Comparative Example 4

Example 6 was repeated in the same manner as described above except that an aqueous solution containing 1.5 % by weight of the aqueous solution of lauric acid ester of sucrose (LWA1570) and 1.4 % by weight of polyvinyl alcohol (PVA203) was applied in an amount of 2.50 cc/m² and that the anti-fogging layer had a basis weight of 49 mg/m² and a weight ratio of the sucrose lauric ester to the polyvinyl alcohol of 29:71. Fogs were significantly formed on a surface of the lid corresponding to the portion highly stretched during the thermoforming. Slight fogging also occurred on a surface of the lid corresponding to the portions slightly stretched during the thermoforming. The lid showed good anti-blocking property. The friction coefficient was 0.22.

### Comparative Example 5

Example 6 was repeated in the same manner as described above except that no polyvinyl alcohol was used and the amount of the sucrose lauric ester was changed to 4.9 % by weight.

A fogging test was performed in the same manner as that in Example 1 to reveal that a fogged pattern similar to that in Comparative Example 3 was formed. The lid showed fair anti-blocking property but was slightly sticky. The friction coefficient was 0.37.

### Comparative Example 6

Example 6 was repeated in the same manner as described above except that an aqueous solution containing 2.0 % by weight of the aqueous solution of lauric acid ester of sucrose (LWA1570) and 1.2 % by weight of polyvinyl alcohol (PVA203) was applied in an amount of 2.60 cc/m² and that the anti-fogging layer had a basis weight of 52 mg/m² and a weight ratio of the sucrose lauric ester to the polyvinyl alcohol of 40:60. Fogs were formed on a surface of the lid corresponding to the portion highly stretched during the thermoforming, though good anti-fogging property was seen on a surface of the lid corresponding to the portions slightly stretched. The anti-fogging layer is considered to be so hard that it failed to follow the stretching of the substrate during the thermoforming. The lid showed good anti-blocking property. The friction coefficient was 0.20.

### Comparative Example 7

Example 6 was repeated in the same manner as described above except that an aqueous solution containing 1.5 % by weight of the aqueous solution of lauric acid ester of sucrose (LWA1570), 1.2 % by weight of polyvinyl alcohol (PVA203) and 0.2 % by weight of D-sorbitol was applied in an amount of 2.60 cc/m² and the anti-fogging layer had a basis weight of 50 mg/m² and a weight ratio of sucrose lauric ester:polyvinyl alcohol:sorbitol of 30:60:10. The lid surface had a lot of portions in which no anti-fogging layer was present. This non-uniformity of the anti-fogging layer is considered to be attributed to decreased wettability or compatibility of the surface of the substrate to the coating solution. The lid was sticky and had blocking tendency. The friction coefficient was 0.61. The stickiness is considered to be ascribed to high moisture absorbing property of the sorbitol.

The anti-fogging layer of the present invention should not contain a polyhydric alcohol such as sorbitol.

### Example 7

Example 6 was repeated in the same manner as described except that linear low density polyethylene (UF230 manufactured by Nippon Polychem Inc.; MI: 1.1) was substituted for the propylene/ethylene random copolymer. No fog or condensed water drops were found to form in the initial stage of the storage. Such a state was found to maintain for at least 24 hours. No blocking was observed in the lid. The friction coefficient was 0.35.

### Example 8

Example 6 was repeated in the same manner as described except that propylene homopolymer (FY4 manufactured by Nippon Polychem Inc.; MI: 5.0) was substituted for the propylene/ethylene random copolymer and that the extruded sheet was rapidly cooled with cooling rollers to prevent whitening of the sheet due to α-crystals. No fog or condensed water drops were found to form in the initial stage of the storage. Such a state was found to maintain for at least 24 hours. No blocking was observed in the lid. The friction coefficient was 0.28.

## Claims

1. An anti-fogging sheet comprising a transparent substrate, and an antifogging layer provided on one side of said transparent substrate, characterized in that said antifogging layer contains a lauric acid ester of sucrose having an HLB value of 14-16 and a water-soluble polymer, wherein the weight ratio of said lauric acid ester of sucrose to said water-soluble polymer is 50:50 to 80:20.

2. An anti-fogging sheet as claimed in claim 1, further comprising a silicone layer provided on the other side of said transparent substrate.

3. An anti-fogging sheet as claimed in claim 1 or 2, wherein said water-soluble polymer is at least one member selected from the group consisting of polyvinyl pyrrolidone, polyvinyl alcohol and polyethylene glycol.

4. An anti-fogging sheet as claimed in any preceding claim, wherein said transparent substrate is made of a polymer selected from the group consisting of polyethylene resins, polypropylene resins, polystyrene resins, amorphous polyethylene terephthalate, polylactic acid and mixtures thereof.

5. An anti-fogging sheet as claimed in claim 1, wherein said transparent substrate comprises a first polyolefin resin layer, and a second polyolefin resin layer laminated thereon and containing an anti-fogging agent and/or an antistatic agent, said second layer having a thickness smaller than that of said first layer, and said second layer having a surface which has been subjected to a corona discharge treatment and on which said antifogging layer is directly provided.

6. An anti-fogging sheet as claimed in claim 5, further comprising a silicone layer provided on the other side of said transparent substrate.

7. An anti-fogging sheet as claimed in claim 5 or 6, wherein said water-soluble polymer is at least one member selected from the group consisting of polyvinyl pyrrolidone and polyvinyl alcohol.

8. An anti-fogging sheet as claimed in any one of claims 5 through 7, wherein said antifogging agent and/or an antistatic agent are at least one member selected from the group consisting of a tertiary amide of a higher fatty acid, a higher fatty acid ester of sorbitan, a higher fatty acid ester of glycerol and a higher fatty acid ester of polyglycerol.

9. An anti-fogging sheet as claimed in any one of claims 5 through 8, wherein said polyolefin resin of each of said first and second polyolefin resin layers is a polypropylene resin.

10. A container for a food, comprising a portion made of an anti-fogging sheet according to any preceding claim, said antifogging layer providing an inside surface of said container.

11. A container as claimed in claim 10, wherein said portion is a lid and/or a container body of said container.
